Europäisches Patentamt

European Patent Office

Office européen des brevets

(11) Veröffentlichungsnummer : **0 162 341**
**B1**

## (12) EUROPÄISCHE PATENTSCHRIFT

(45) Veröffentlichungstag der Patentschrift :
09.11.88

(21) Anmeldenummer : 85105177.1

(22) Anmeldetag : 05.05.83

(60) Veröffentlichungsnummer der früheren Anmeldung nach Art. 76 EPÜ : 0095072

(51) Int. Cl.⁴ : **H 02 J 7/10**, H 02 M 3/335, H 02 M 3/338

(54) **Elektronisches Schaltnetzteil.**

(30) Priorität : 17.05.82 DE 3218594

(43) Veröffentlichungstag der Anmeldung :
27.11.85 Patentblatt 85/48

(45) Bekanntmachung des Hinweises auf die Patenterteilung : 09.11.88 Patentblatt 88/45

(84) Benannte Vertragsstaaten :
AT BE CH DE FR GB IT LI LU NL SE

(56) Entgegenhaltungen :
EP-A- 0 030 026
EP-A- 0 030 276
FR-A- 2 371 814
ELECTRONICS, Band 51, Nr. 26, 21. Dezember 1978, New York, US; R.J. BOSCHERT "Flyback converters; solid-state solution to low-cost switching power supplies", Seiten 100-104

(73) Patentinhaber : Braun Aktiengesellschaft
Rüsselsheimer Strasse 22
D-6000 Frankfurt/Main (DE)

(72) Erfinder : Bergk, Günther
Lahnstrasse 4
D-6096 Raunheim (DE)
Erfinder : Schwarz, Gerhard
Eggestrasse 16
D-5990 Altena 1 (DE)

(74) Vertreter : Einsele, Rolf
Braun Aktiengesellschaft Postfach 1120 Frankfurter Strasse 145
D-6242 Kronberg Taunus (DE)

**Beschreibung**

Die Erfindung betrifft ein elektronisches Schaltnetzteil zur Stromversorgung eines Akkumulators und eines parallelschaltbaren elektrischen Verbrauchers aus einer Wechsel- oder Gleichspannungsquelle unterschiedlicher Spannungshöhe mit einem primär getakteten Sperrwandler, der einen Übertrager enthält, dessen Sekundärwicklung in Reihe zum Akkumulator und einer ersten Diode und dessen Primärwicklung in Reihe zur Kollektor-Emitter-Strecke eines ersten Transistor geschaltet ist, dessen Basis sowohl über einen Rückkopplungswiderstand und einen ersten Kondensator an das eine Wicklungsende der Sekundärwicklung des Übertragers angeschlossen ist, deren anderes Wicklungsende mit dem Akkumulator verbunden ist, als auch über einen ersten Widerstand mit dem einen Pol der Eingangsspannungsquelle und mit dem Kollektor eines zweiten Transistors verbunden ist, dessen Emitter an Massepotential gelegt ist, wobei der Emitter des ersten Transistors sowohl über einen zweiten Widerstand und den Akkumulator mit Massepotential verbunden als auch über eine erste Zenerdiode an die Basis des zweiten Transistors angeschlossen ist, und wobei eine eingangsseitig mit der am Akkumulator anliegenden Spannung beaufschlagte Kippstufe vorgesehen ist, deren Ausgang den ersten Transistor bei Erreichen einer vorgegebenen Spannung am Akkumulator sperrt.

Ein elektronisches Schaltnetzteil ähnlicher Art ist aus der EP-A1-30 026 bekannt, das zur geregelten Speisung eines Verbrauchers dient, der an verschiedenen Gleich- und Wechselspannungen sowie an verschiedenen Wechselstromfrequenzen ohne Umschaltung betrieben werden kann. Das Schaltnetzteil weist einen Sperrwandler auf, der mittels zweier steuerbarer Halbleiterschalter abhängig von dem durch die Primärwicklung eines Übertragers fließenden Strom und abhängig von der zugeführten Eingangsspannung so gesteuert wird, daß die abgegebene Ausgangsleistung vorzugsweise konstant ist. Als Verbraucher ist die Parallelschaltung eines Akkumulators mit einem Gleichstrommotor vorgesehen, so daß die Schaltungsanordnung beim Netzbetrieb entweder die volle Motorleistung oder bei ausgeschaltetem Motor einen Ladestrom für den Akkumulator liefert (Fig. 1 der EP-A1-30 026).

Bei einer Weiterbildung dieses bekannten Schaltnetzteils (Fig. 4) wird bei ausgeschaltetem Gleichstrommotor eine Schnelladung des Akkumulators mit hohem Strom vorgenommen. Um eine Beschädigung des Akkumulators bei der Schnelladung zu vermeiden, ist bei diesem bekannten Schaltnetzteil eine eingangsseitig mit der am Akkumulator anliegenden Spannung beaufschlagte Kippstufe vorgesehen, die aus einem Transistor besteht, dessen Kollektor über einen Widerstand mit der Basis des in Reihe zum Übertrager geschalteten Schalttransistors verbunden ist und dessen Basis-Emitter-Strecke in Reihe mit einem weiteren Widerstand und einer Zenerdiode parallel zum zu ladenden Akkumulator geschaltet ist. Übersteigt die Akkumulatorspannung während des Ladevorganges den durch die Zenerdiode vorgegebenen Wert, so schaltet der Transistor durch und legt ein negatives Potential an die Basis des in Reihe zur Primärwicklung des Übertragers geschalteten Schalttransistors, so daß dieser sperrt. Dabei hängt der jeweilige Einschalt- und Abschaltzeitpunkt des Sperrwandlers von den durch zwei verschiedene Widerstände fließenden Strömen ab, so daß sich aus der Differenz dieser Ströme ein Hystereseverhalten ergibt. Auf diese Weise schaltet der Sperrwandler nicht ständig zwischen einem eingeschalteten und einem ausgeschalteten Zustand hin und her, sondern die Akkumulatorspannung muß jeweils um einen gewissen Betrag abgesunken sein, bevor der Ladestrom erneut eingeschaltet wird. Mit dem Ausschalten des Sperrwandlers erlischt jeweils auch eine im Basiskreis des zweiten Transistors angeordnete Leuchtdiode und zeigt damit das Ende des Ladevorgangs an.

Bei dem bekannten elektronischen Schaltnetzteil zum Schnelladen eines Akkumulators erfolgt die Festlegung des Abschaltzeitpunktes der Schnelladung durch Erfassen der Akkumulatorspannung während des sekundärseitigen Stromflusses.

Aufgabe der vorliegenden Erfindung ist es, ein elektronisches Schaltnetzteil zur Stromversorgung eines elektrischen Verbrauchers aus einer Wechsel- oder Gleichspannungsquelle unterschiedlicher Spannungshöhe zu schaffen, bei dem die Erfassung der Akkumulatorspannung nach Beendigung der Übertrager-Entladephase erfolgt.

Diese Aufgabe wird erfindungsgemäß in Verbindung mit den eingangs genannten Merkmalen dadurch gelöst, daß die Kippstufe aus dem zweiten Transistor und einem dritten Transistor besteht, dessen Emitter an den Akkumulator angeschlossen ist, dessen Basis sowohl über einen dritten Widerstand einerseits über eine zweite Diode mit dem einen Wicklungsende der Sekundärwicklung des Übertragers und andererseits über eine dritte Diode mit der Basis des ersten Transistors als auch über einen fünften Widerstand und eine fünfte Diode mit dem Akkumulator verbunden und dessen Kollektor über einen vierten Widerstand mit der Basis des zweiten Transistors verbunden ist, wobei die fünfte Diode anodenseitig an den Akkumulator angeschlossen ist.

Da die Erfassung der Akkumulatorspannung nach Beendigung der Sperrphase und vor dem Wiedereinschalten des ersten Transistors erfolgt können keine Messfehler auftreten, die durch einen unterschiedlich hohen Ladestrom sowie unterschiedliche Innenwiderstände der Akkumulatorzellen bedingt sind.

Eine vorteilhafte Ausgestaltung ist dadurch gekennzeichnet, daß parallel zum Akkumulator die Reihenschaltung der Emitter-Kollektor-Strecke des dritten Transistors und einer anodenseitig mit dem Kollektor des dritten Transistors verbundenen Leuchtdiode mit in Reihe geschaltetem Vorwiderstand geschaltet ist.

Bei dieser Ausgestaltung beginnt die Leuchtdiode bei Beendigung der Schnelladung bzw. beim Übergang auf die Erhaltungsladung zu blinken und gibt somit genaue Auskunft über den Ladezustand des Akkumulators.

Eine weitere vorteilhafte Ausgestaltung ist dadurch gekennzeichnet, daß der Emitter des ersten Transistors über den zweiten Widerstand an eine Anzapfung der Sekundärwicklung des Übertragers angeschlossen ist. Dadurch wird eine Linearisierung des Sekundärstromes bzw. der abgegebenen Leistung über den gesamten Betriebsspannungsbereich erzielt.

Anhand eines in der Zeichnung dargestellten Ausführungsbeispiels soll der der Erfindung zugrundeliegende Gedanke näher erläutert werden. Es wird hingewiesen, daß im Patent Nr. 0 095 072 für weitere der Zeichnung entnehmbare Einzelheiten Schutz beansprucht wird.

Es zeigen :

Figur 1 ein Schaltbild eines elektronischen Schaltnetzteiles mit einer Steuer- und Regelelektronik zur Schnelladung eines Akkumulators mit automatischem Übergang auf eine Erhaltungsladung.

Figur 2 eine Schaltungsanordnung gemäß Fig. 1, mit einer Blinkanzeige bei Übergang vom Schnelladezustand in den Erhaltungsladezustand und

Figur 3 eine Schaltungsanordnung gemäß Fig. 1, mit einer Wicklungsanzapfung der Sekundärwicklung.

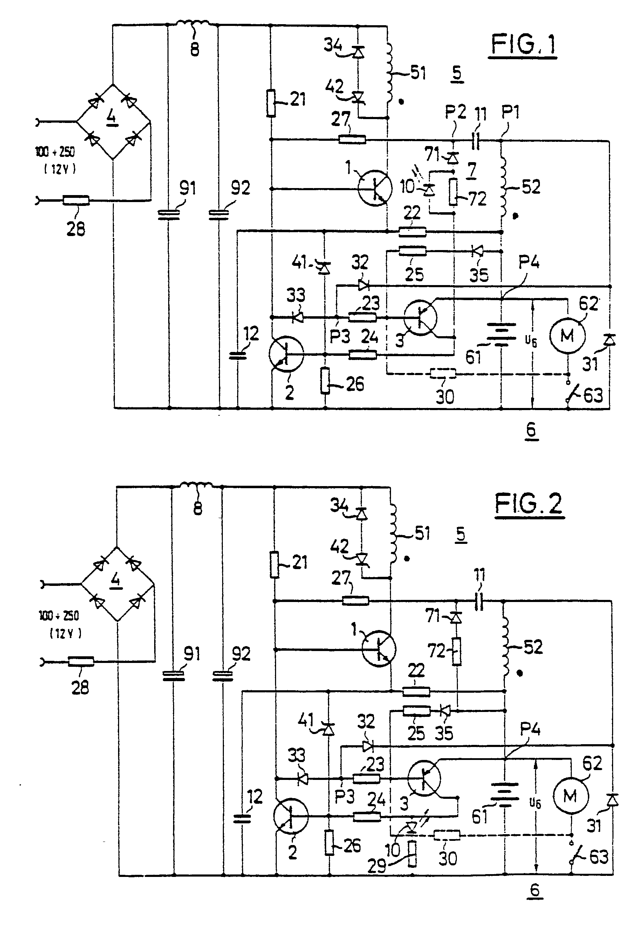

In Figur 1 ist ein elektronisches Schaltnetzteil dargestellt, das aus einem primär getakteten Sperrwandler mit einem Übertrager 5 und einem ersten Transistor 1 sowie einer im Lastkreis vorgesehenen ersten Diode 31 besteht. Der Sperrwandler wird über eine Gleichrichter-Brückenschaltung 4 und einen Widerstand 28 aus einem Gleich- oder Wechselspannungsnetz gespeist, dessen Spannung zwischen 100 und 250 Volt, im Extremfall aber auch 12 Volt, und dessen Frequenz im Falle eines speisenden Wechselspannungsnetzes nahezu beliebig sein kann. Die gleichgerichtete Ausgangsspanung wird über eine Sieb- und Glättungsanordnung, bestehend aus einer Längsdrossel 8 und zwei Glättungskondensatoren 91, 92 an den Eingang des Sperrwandlers bzw. der Steuer- und Regelelektronik gelegt.

Parallel zu den Gleichspannungsklemmen ist die Reihenschaltung der Primärwicklung 51 des Übertragers 5 mit der Kollektor-Emitter-Stecke des ersten Transistors 1 und eines Kondensators 12 geschaltet. An die Basis des ersten Transistors 1 ist ein erster Widerstand 21 angeschlossen, der über die Längsdrossel 8 mit dem positiven Pol der Eingangsspannungsklemme verbunden ist. Darüber hinaus ist die Basis des ersten Transistors 1 über die Kollektor-Emitter-Strecke eines zweiten Transistors 2 mit Masse- oder Bezugspotential verbunden. Der Emitter des ersten Transistors 1 ist an die Kathode einer ersten Zenerdiode 41 angeschlossen, deren Anode sowohl mit der Basis des zweiten Transistors 2 als auch über einen Widerstand 26 mit Masse- oder Bezugspotential verbunden ist. Darüber hinaus ist der Emitter des ersten Transistors 1 über einen zweiten Widerstand 22 an ein Wicklungsende der Sekundärwicklung 52 des Übertragers 5 angeschlossen. Der Wickelsinn der Primär- und Sekundärwicklung des Übertragers 5 ist durch die eingetragenen Punkte angedeutet.

Ein Rückkopplungs-Kondensator 11 ist über einen Rückkopplungs-Widerstand 27 mit der Basis des ersten Transistors 1 und unmittelbar mit dem einen Wicklungsende der Sekundärwicklung 52 des Übertragers 5 verbunden. An das andere Wicklungsende der Sekundärwicklung 52 ist sowohl der Verbraucher 6, bestehend aus der Parallelschaltung eines Akkumulators 61 mit der Reihenschaltung eines Schalters 63 und eines Gleichstrommotors 62, als auch die Anode einer Diode 35 angeschlossen, zu der in Reihe ein mit der Basis eines dritten Transistors 3 verbundener Widerstand 25 geschaltet ist.

An die Verbindung des dritten Widerstandes 23 mit der dritten Diode 33 ist anodenseitig eine zweite Diode 32 angeschlossen, deren Kathode an das eine Wicklungsende der Sekundärwicklung 52 ebenso angeschlossen ist wie die Kathode der ersten Diode 31, die anodenseitig mit dem Verbraucher 6 verbunden ist.

Der Rückkopplungs-Kondensator 11 ist zusätzlich mit einer Entladeschaltung 7 verbunden, die aus der Reihenschaltung eines Entladewiderstandes 72 und einer Entladediode 71 besteht, die kathodenseitig mit dem Rückkopplungs-Kondensator 11 verbunden ist. Der Entladewiderstand 72 ist an dem Kollektor des dritten Transistors 3 angeschlossen, dessen Emitter mit dem anderen Wicklungsende der Sekundärwicklung 52 bzw. mit dem Verbraucher 6 verbunden ist.

Zur Begrenzung der Rückschlagsspannung ist parallel zur Primärwicklung 51 des Übertragers 5 eine Schaltung vorgesehen, die aus der Reihenschaltung einer Zenerdiode 42 mit einer vierten Diode 34 besteht, die anodenseitig miteinander verbunden sind.

Wahlweise kann die Basis des dritten Transistors 3 über einen weiteren Widerstand 30 an die Verbindung des Gleichstrommotors 62 mit dem Schalter 63 angeschlossen werden. Diese Verbindungsmöglichkeit ist in Fig. 1 gestrichelt eingetragen.

Nachstehend soll die Funktionsweise der Schaltungsanordnung gemäß Fig. 1 näher erläutert werden.

Nach der Gleichrichtung mittels der Gleichrichter-Brückenschaltung 6 und Siebung bzw. Glättung mittels der Längsdrossel 8 bzw. der Querkondensatoren 91, 92 wird der als Schalttransistor arbeitende erste Transistor 1 über den ersten Widerstand 21 mit einem geringen Basisstrom angesteuert. Infolge des einschaltenden ersten Transistors 1 entsteht über die Schaltstrecke des ersten Transistors 1 und die Primärwicklung 51 des Übertragers 5 ein Mitkopplungseffekt, durch den der erste Transistor 1 zusätzlich angesteuert und in den leitenden Zustand geschaltet wird. Der Kollektorstrom steigt linear an und erzeugt am zweiten Widerstand 22 eine proportionale Spannung. Beim Erreichen eines bestimmten Spitzenstromwertes wird über die erste Zenerdiode 41 der zweite Transistor 2 angesteuert, gelangt dadurch in den leitenden Zustand und verbindet die Basis des ersten Transistors 1 mit Bezugspotential bzw. Masse und entzieht damit dem ersten Transistor 1 den Basisstrom, woraufhin der erste Transistor 1 sperrt. Mit Beginn der Sperrphase wechselt die Polarität der in der Sekundärwicklung 52 des Übertragers 5 induzierten Spannung am Anschlußpunkt P1 des Rückkopplungs-Kondensators 11. Die im Übertrager 5 gespeicherte Energie wird damit nach dem Prinzip des Sperrwandlers über die erste Diode 31 an den Verbraucher 6 abgegeben.

Während des Umschwingvorganges des Übertragers 5 begrenzen die Diode 34 sowie die Zenerdiode 42 parallel zur Primärwicklung 51 des Übertragers 5 die Rückschlagsspanungsspitze während der Sperrphase.

Die während der gesamten Übertrager-Entladephase entstehende negative Spannung am Punkt P1 gelangt über die zweite Diode 32 an den Verbindungspunkt P3, d.h. an die Verbindung zwischen der dritten Diode 33 und dem dritten Widerstand 23 im Basisstromkreis des dritten Transistors 3. Infolge dieser negativen Spannung schaltet der als PNP-Transistor ausgeführte dritte Transistor 3 in den leitenden Zustand.

Im Leitzustand des ersten Transistors 1 wurde der Rückkopplungs-Kondensator 11 über den Rückkopplungs-Widerstand 27 auf die Spannung

$$U_{C11} = U_{sek.} \cdot (1 - e^{-t/\tau})$$

aufgeladen, wobei sich am Punkt P2 des Rückkopplungs-Kondensators 11 eine negative Polarität ausbildete.

Diese Ladung mit negativer Polarität am Punkt P2 fließt bei geöffnetem dritten Transistor 3 über die Entladeschaltung 7, d.h. über die Entladediode 71, den Entladewiderstand 72 sowie die parallel zum Entladewiderstand 72 geschaltete Leuchtdiode 10 über die durchgeschaltete Kollektor-Emitter-Strecke des dritten Transistors 3 zum Punkt P4, d.h. an den Pluspol des Akkumulators 61 ab.

Mit der Entladung des Rückkopplungs-Kondensators 11 und anschließender Umladung wird somit die Leuchtdiode 10 als Betriebsanzeige angesteuert. Dabei gewährleistet der parallel geschaltete Entladewiderstand 72 auch die Umladung unterhalb der Flußspannung der Leuchtdiode 10.

Die Spannung am umgeladenen Rückkopplungs-Kondensator 11 beträgt:

$$U_{C11} = U_6 \ (= U_{Batt}) - U_{F31} - U_{CEsatT3} + U_{F71}$$

Dabei bedeutet $U_{C11}$ die Spannung am umgeladenen Rückkopplungs-Kondensator 11, $U_6$ die Spannung am Verbraucher 6, $U_{F71}$ den Spannungsabfall an der Entladediode 71, $U_{CEsatT3}$ die Kollektor-Emitter-Sättigungsspannung des dritten Transistors 3 und $U_{F31}$ den Spannungsabfall an der ersten Diode 31.

Die Kollektor-Emitter-Sättigungsspannung des dritten Transistors 3 ist am Ende des Umladevorganges des Rückkopplungs-Kondensators vernachlässigbar. Die Durchlaß-Spannungsabfälle an der Entladediode 71 und der ersten Diode 31 sind nahezu gleich, da es sich um etwa baugleiche Dioden handelt, und können daher gegeneinander gekürzt werden, so daß die Spannung am umgeladenen Rückkopplungs-Kondensator 11der Verbraucherspannung $U_6$ mit positivem Vorzeichen am Punkt P2 entspricht.

Diese umgepolte Spannung am umgeladenen Rückkopplungs-Kondensator 11 und am Verbraucher 6 ist deshalb von Bedeutung, weil die positive Spannung am Punkt P2 auch bei sehr niedriger Betriebsspannung von zum Beispiel 12 Volt ein sofortiges Wiedereinschalten des ersten Transistors 1 gewährleistet, wenn nach Beendigung der Übertrager-Entladephase der aus dem zweiten und dritten Transistor gebildete Spannungskomparator infolge der noch nicht erreichten Ausgangsspannung am Punkt P4 in den Sperrzustand kippt.

Wenn die Ausgangsspannung $U_6$ ihren Sollwert erreicht hat oder diesen Sollwert überschreitet, dann bleiben der zweite und dritte Transistor 2, 3 im leitenden Zustand und der erste Kondensator 11 ist am Punkt P1 über die Sekundärwicklung 52 des Übertragers 5 galvanisch mit dem Pluspol des Verbrauchers 6 und am Punkt P2 über den Widerstand 27 und den durchgeschalteten zweiten Transistor 2 mit Masse- bzw. Bezugspotential verbunden. Damit wird der Anschlußpunkt P2 des Rückkopplungs-Kondensators 11 gegenüber dem Anschlußpunkt P1 erneut negativ. Die Größe dieser negativen Spannung wird von der Entladediode 71, der Leuchtdiode 10 bzw. dem Entladewiderstand 72 und dem Widerstand 27 bestimmt. Der durchgeschaltete Spannungskomparator, d.h. der durchgeschaltete zweite und dritte Transistor 2, 3 verhindert solange die Wiedereinschaltung des ersten Transistors 1, bis die Verbraucherspannung $U_6$ den vorgegebenen Sollwert unterschreitet und damit der Komparator, d. h. der zweite und dritte Transistor 2, 3 in den Sperrzustand kippen. Im gesperrten Zustand des zweiten und dritten Transistors 2, 3 erfolgt wiederum eine Aufladung des Rückkopplungs-Kondensators 11 über den ersten Widerstand 21 sowie den Rückkopplungs-Widerstand 27 auf den summierten Spannungswert der Verbrauchspannung $U_6$ und der Basis-Emitter-Spannung des ersten Transistors 1. Die dritte Diode 33 entkoppelt dabei für diesen Vorgang den aus dem dritten und fünften Widerstand 23 bzw. 25 gebildeten Spannungsteiler vom ersten Widerstand 21. Die Diode 35, die vorzugsweise als Germaniumdiode ausgeführt ist, dient dazu, den Spannungsverlauf des Akkumulators in Abhängigkeit von der Temperatur durch die Elektronik-Schaltung nachzubilden.

Schaltet man den gestrichelt eingetragenen Widerstand 30 einerseits an die Verbindung des dritten Widerstandes 23 mit der Basis des dritten Transistors 3 und andererseits an die Verbindung des Motorschalters 63 mit dem Gleichstrommotor 62, so kann ohne einen zusätzlichen Schalter der aus dem dritten Widerstand 23 und fünften Widerstand 25 gebildete Spannungsteiler beim Einschalten des Gleichstrommotors 62 auf einen niedrigeren Ausgangsspannungspegel, z. B. von 2,9 Volt auf 2,6 Volt, gebracht werden. Damit wird erreicht, daß sich erst dann wieder ein größerer Ausgangsstrom einstellt, wenn durch die Belastung oder den Verbrauch die niedrigere, mittlere Akkumulatorspannung unterschritten wird. Der Gleichstrommotor 62 läuft dann bei Netzbetrieb nicht ständig mit der hohen Ladeschlußspannung des Akkumulators 61. Nach dem Abschalten des Gleichstrommotors 62 erfolgt sofort eine schnelle Nachladung des Akkumulators 61.

Wie aus dieser Beschreibung der Funktionsweise deutlich wird, ist es mit geringem Bauteilaufwand möglich, den hohen Schnelladestrom des Akkumulators 61 bei Annäherung bzw. Erreichen des durch die Beschaltung des aus dem zweiten und dritten Transistor 2, 3 gebildeten Spannungskomparators auf einen geringen Erhaltungsladestrom für den Akkumulator 61 zu reduzieren. Dabei erfolgt die Messung der Akkumulatorspannung nicht während des hohen in den Akkumulator 61 hineinfließenden Ladestromes, sondern lediglich bei geringer Belastung. Dadurch werden die durch unterschiedliche Innenwiderstände der einzelnen Zellen des Akkumulators 61 sowie durch unterschiedliche Ladeströme verursachten Fehler vermieden. Dadurch, daß die Spannung des umgeladenen ersten Kondensators in etwa gleich der Verbraucherspannung ist, kann eine Normalladung mit einem Dauerlade-Nennstrom von ca. 40 bis 50 Milliampere auch bei niedriger Betriebsspannung von z. B. 12 Volt durchgeführt werden. Schließlich ist gewährleitet, daß die Steuer- und Regelelektronik zur Schnell- bzw. Dauerladung bei gezogenem Netzstecker keinen Strom aus dem Akkumulator 61 verbraucht, da über die Spannungskomparatorschaltung bzw. über den Sperrwandler kein Stromfluß möglich ist.

Die in Fig. 2 dargestellte Variante entspricht weitestgehend der in Fig. 1 dargestellten Steuer- und Regelelektronik für ein elektronisches Schaltnetzteil. Gleiche Bauelemente sind in dieser Schaltungsanordnung ebenfalls mit gleichen Bezugsziffern versehen und insoweit wird auf die Beschreibung des ersten Ausführungsbeispieles Bezug genommen. Unterschiede dieser Schaltungsanordnung gegenüber der Schaltungsanordnung nach Fig. 1 bestehen darin, daß zum einen die Leuchtdiode 10 nicht parallel zum Entladewiderstand 72 sondern in den Kollektorkreis des dritten Transistors 3 eingefügt, anodenseitig mit dem Kollektor des dritten Transistors 3 verbunden und kathodenseitig über einen Vorwiderstand 29 an Masse- bzw. Besugspotential angeschlossen ist, und zum anderen die Entladeschaltung 7 nicht mehr mit dem Kollektor des dritten Transistors 3, sondern unmittelbar an die Verbindung der Sekundärwicklung 52 des Übertragers 5 mit dem Verbraucher 6 angeschlossen ist.

In dieser Schaltungsvariante beginnt die Leuchtdiode 10 bei der Beendigung des Schnelladevorganges bzw. dem übergang auf den Erhaltungsladevorgang zu blinken, weil bei erreichter Ausgangsspannung die Leuchtdiode 10 an den Akkumulator 61 angeschaltet ist. Durch die relativ hohe Stromentnahme der Leuchtdiode 10 sinkt die Akkumulatorspannung schnell unter den eingestellten Sollwert $U_A$ bzw. den maximalen Akkumulator-Spannungswert, so daß der aus dem zweiten und dritten Transistor 2, 3 gebildete Komparator wieder in den Sperrzustand kippt. Daraufhin liefert die Sperrwandlerschaltung über den Schalttransistor 1 erneut die von der Leuchtdiode 10 entnommene Energie nach, bis wiederum der Sollwert der Komparatorspannung erreicht ist. Dieser Vorgang wiederholt sich etwa im 2 Hz Rhythmus und zeigt damit an, daß die Schaltung in den Erhaltungsladezustand übergeht.

Die maximale Batteriespannung beträgt bei dieser Anordnung wie bei der Anordnung nach Fig. 1.

$$U_{Battmax} = U_6 = \left( \frac{R23 + R25}{R25} \right) \cdot (U_{BE\,T3} - U_{F35}) + U_{F33} + U_{CEsat\,T_2}.$$

wobei R23 und R25 die Widerstandswerte des dritten und fünften Widerstandes 23, 25 sind.

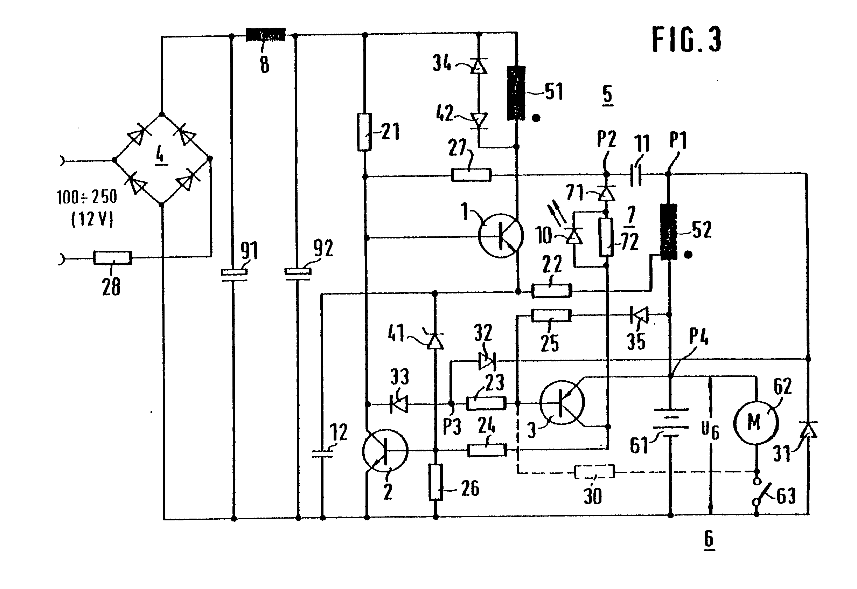

Die in Fig. 3 dargestellte Variante entspricht in ihren Einzelheiten der Schaltungsanordnung gemäß Fig. 1, weist jedoch abweichend von der Anordnung gemäß Fig. 1 einen Anschluß des zweiten Widerstandes 22 an einer Anzapfung der Sekundärwicklung 52 des Übertragers 5 auf. In der Einschaltphase des ersten Transistors 1 entsteht damit an der Anzapfung der Sekundärwicklung 52 eine positive Spannung, die elektrisch in Reihe mit der Spannung des Akkumulators 61 geschaltet ist. Die an dieser Anzapfung sich proportional zur Betriebsspannung ändernde Gegenspannung bewirkt eine Änderung des Spitzenstromes des ersten Transistors 1 und damit eine Linearisierung des Sekundärstromes bzw. der Leistung über den gesamten Betriebsspannungsbereich. Dies erfolgt unabhängig von der Art des Abschaltens des erstens Transistors 1.

Bei der in Fig. 3 dargestellten Anordnung erfolgt die Abschaltung des ersten Transistors 1 dann, wenn der linear ansteigende Strom am zweiten Widerstand 22 die Spannung

$$U = U_{z41} + U_{BET2}$$

erzeugt. Ist diese Bedingung erfüllt, so wird der zweite Transistor 2 angesteuert und entzieht dem ersten Transistor 1 den Basisstrom, worauf dieser in den Sperrzustand kippt.

Eine weitere Variante der in Fig. 3 dargestellten Anordnung ist dadurch möglich, daß die erste Zenerdiode 41 nicht an den Emitter des ersten Transistors 1, sondern an dessen Basis angeschlossen wird. Damit wird die Basis des ersten Transistors 1 auf einem bestimmten Spannungspotential festgehalten. Erreicht die Spannung am Emitter des ersten Transistors 1 infolge des linear ansteigenden Stromes den Wert der Basis abzüglich der Basis-Emitter-Schwellenspannung, dann kann kein positiver Basisstrom mehr fließen und der erste Transistor 1 kippt in den Sperrzustand.

**Patentansprüche**

1. Elektronisches Schaltnetzteil zur Stromversorgung eines Akkumulators (61) und eines parallelschaltbaren elektrischen Verbrauchers (62) aus einer Wechsel- oder Gleichspannungsquelle unterschiedlicher Spannungshöhe mit einem primär getakteten Sperrwandler, der einen Übertrager (5) enthält, dessen Sekundärwicklung (52) in Reihe zum Akkumulator (61) und einer ersten Diode (31) und dessen Primärwicklung (51) in Reihe zur Kollektor-Emitter-Strecke eines ersten Transistor (1) geschaltet ist, dessen Basis sowohl über einen Rückkopplungswiderstand (27) und einen ersten Kondensator (11) an das eine Wicklungsende der Sekundärwicklung (52) des Übertragers (5) angeschlossen ist, deren anderes Wicklungsende mit dem Akkumulator (61) verbunden ist, als auch über einen ersten Widerstand (21) mit dem einen Pol der Eingangsspannungsquelle und mit dem Kollektor eines zweiten Transistors (2) verbunden ist, dessen Emitter an Massepotential gelegt ist, wobei der Emitter des ersten Transistors (1) sowohl über einen zweiten Widerstand (22) und den Akkumulator (61) mit Massepotential verbunden als auch über eine erste Zenerdiode (41) an die Basis des zweiten Transistors (2) angeschlossen ist, und wobei eine eingangsseitig mit der am Akkumulator (61) anliegenden Spannung ($U_6$) beaufschlagte Kippstufe vorgesehen ist, deren Ausgang den ersten Transistor (1) bei Erreichen einer vorgegebenen Spannung am Akkumulator (61) sperrt, wobei die Kippstufe aus dem zweiten Transistor (2) und einem dritten Transitor (3) besteht, dessen Emitter an den Akkumulator (61) angeschlossen ist, dessen Basis sowohl über einen dritten Widerstand (23) einerseits über eine zweite Diode (32) mit dem einen Wicklungsende der Sekundärwicklung (52) des Übertragers (5) und andererseits über eine dritte Diode (33) mit der Basis des ersten Transistors (1) als auch über einen fünften Widerstand (25) und eine fünfte Diode (35) mit dem Akkumulator (61) verbunden und dessen Kollektor über einen vierten Widerstand (24) mit der Basis des zweiten Transistors (2) verbunden ist, wobei die fünfte Diode (35) anodenseitig an den Akkumulator (61) angeschlossen ist.

2. Elektronisches Schaltnetzteil nach Anspruch 1, dadurch gekennzeichnet, daß parallel zum Akkumulator (61) die Reihenschaltung der Emitter-Kollektor-Strecke des dritten Transistors (3) und einer anodenseitig mit dem Kollektor des dritten Transistors (3) verbundenen Leuchtdiode (10) mit in Reihe geschaltetem Vorwiderstand (29) geschaltet ist.

3. Elektronisches Schaltnetzteil nach Anspruch 1 oder 2, dadurch gekennzeichnet, daß der elektrische Verbraucher aus einem Gleichstrommotor (62) besteht, der über einen Schalter (63) mit dem Akkumulator (61) verbindbar ist und daß an die Verbindung des Gleichstrommotors (62) mit dem Schalter (63) einerseits und an die Basis des dritten Transistors (3) andererseits ein siebenter Widerstand (30) angeschlossen ist.

4. Elektronisches Schaltnetzteil nach einem der vorstehenden Ansprüche, dadurch gekennzeichnet, daß der Emitter des ersten Transistors (1) über den zweiten Widerstand (22) an eine Anzapfung der Sekundärwicklung (52) des Übertragers (5) angeschlossen ist. ·

**Claims**

1. An electronic switching power supply for supplying power to an accumulator (61) and an electrical load (62) adapted to be connected in parallel from an AC or DC voltage source of varying voltage levels, with a primary switched-mode blocking oscillator-type converter which includes a transformer (5) having its secondary coil (52) connected in series with the accumulator (61) and a first diode (31) while its primary coil (51) is connected in series with the collector-emitter circuit of a first transistor (1) having its base connected both to the one end of the secondary coil (52) of the transformer (5) through a feedback resistor (27) and a first capacitor (11), while the other coil end is connected to the accumulator (61), and, through a first resistor (21), to the one terminal of the input voltage source and to the collector of a second transistor (2) having its emitter connected to ground potential, with the emitter of the first transistor (1) being connected both to ground potential through a second resistor (22) and the accumulator (61) and, through a first Zener diode (41), to the base of the second transistor (2), with a flip-flop circuit being provided having applied to its input the voltage ($U_6$) residing at the accumulator (61), the flip-flop output cutting the first transistor (1) off when the voltage at the accumulator (61) has reached a predetermined value, wherein the flip-flop circuit is comprised of the second transistor (2) and a third transistor (3) having its emitter connected to the accumulator (61), its base being connected through a third resistor (23) both to the one end of the secondary coil (52) of the transformer (5) via a second diode (32) and to the base of the first transistor (1) via a third diode (33), the base being further connected, through a fifth resistor (25) and a fifth diode (35), to the accumulator (61), and its collector being connected through a fourth resistor (24) to the base of the second transistor (2), with the fifth diode (35) having its anode connected to the accumulator (61).

2. An electronic switching power supply as claimed in claim 1, characterized in that the accumulator (61) has connected in parallel therewith the series arrangement comprising the emitter-collector circuit of the third transistor (3) and a light-emitting diode (10) with a series resistor (29), said diode having its anode connected to the collector of the third transistor (3).

3. An electronic switching power supply as claimed in claim 1 or claim 2, characterized in that the electrical load is comprised of a DC motor (62) adapted to be connected to the accumulator (61) through a switch (63), and that a seventh resistor (30) has its one lead connected to the junction of the DC motor (62) and the switch (63) and its other lead to the base of the third transistor (3).

4. An electronic switching power supply as claimed in any one of the preceding claims, characterized in that the emitter of the first transistor (1) is connected to a tap of the secondary coil (52) of the transformer (5) through the second resistor (22).

**Revendications**

1. Dispositif d'alimentation à commutation électronique pour alimenter en courant à partir d'une source de tension alternative ou continue pouvant avoir différents niveaux de tension, un accumulateur (61) et un débiteur (62) électrique qui peut être branché en parallèle à l'accumulateur, ledit dispositif comportant un convertisseur à oscillateur bloqué opérant à une fréquence primaire, ledit convertisseur à oscillateur bloqué comportant un transformateur (5), dont l'enroulement secondaire (52) est branché en série avec l'accumulateur (61) et une première diode (31), et dont l'enroulement primaire (51) est branché en série avec le trajet collecteur-émetteur d'un premier transistor (1), dont la base est connectée tant par l'intermédiaire d'une résistance à rétroaction (27) et d'un premier condensateur (11) à une extrémité d'enroulement secondaire (52) du transformateur, dont l'autre extrémité d'enroulement est reliée à l'accumulateur (61), que par l'intermédiaire d'une première résistance (21) avec l'un des pôles d'une source de tension d'entrée et au collecteur d'un second transistor (2), dont l'émetteur est mis à la masse, et où l'émetteur du premier transistor (1) est tout aussi bien mis à la masse par l'intermédiaire d'une seconde résistance (22) et de l'accumulateur (61), qu'il est relié à la base du second transistor (2) par l'intermédiaire d'une première diode Zener (41), ledit dispositif étant pourvu d'une bascule électronique qui est alimentée à son entrée par la tension ($U_6$) appliquée à l'accumulateur (61) et dont la sortie bloque le premier transistor (1) lorsqu'une tension prédéterminée a été atteinte à l'accumulateur (61), et où la bascule électronique est constituée du second transistor (2) et d'un troisième transistor (3), l'émetteur du troisième transistor étant raccordé à l'accumulateur (61), la base du troisième transistor est tout aussi bien reliée par l'intermédiaire d'une troisième résistance (23), d'une part, par l'intermédiaire d'une seconde diode (32) à l'une des extrémités d'enroulement de l'enroulement secondaire (52) du transformateur (5) et, d'autre part, par l'intermédiaire d'une troisième diode (33) à la base du premier transistor (1), que, par l'intermédiaire d'une cinquième résistance (25) et d'une cinquième diode (35) à l'accumulateur (61), le collecteur du troisième transistor est relié, par l'intermédiaire d'une quatrième résistance (24) à la base du second transistor (2), et où l'anode de la cinquième diode (35) est raccordée à l'accumulateur (61).

2. Dispositif d'alimentation à commutation électronique suivant la revendication 1, caractérisé en ce qu'en parallèle avec l'accumulateur 61 est branché un branchement en série du trajet émetteur-collecteur du troisième transistor (3) et d'une diode lumineuse dont l'anode est connectée au collecteur du troisième transistor (3) et qui est branché en série avec une résistance branchée en amont (29).

3. Dispositif d'alimentation à commutation électronique suivant l'une ou l'autre des revendications 1 ou 2, caractérisé en ce que le débiteur électrique est constitué d'un moteur (62) à courant continu, qui peut être raccordé à l'accumulateur (61) au moyen d'un interrupteur (62) et en ce qu'une septième résistance (30) est reliée, d'une part, à la liaison du moteur (62) à courant continu par l'interrupteur (63) et, d'autre part, à la base du troisième transistor (3).

4. Dispositif d'alimentation suivant l'une quelconque des revendications 1 à 3, caractérisé en ce que l'émetteur du premier transistor (1) est relié à une prise de l'enroulement secondaire (52) du transformateur (5) par l'intermédiaire de la seconde résistance (22).

**0 162 341**

FIG.1

FIG.2

FIG.3

100÷250
(12 V)

0 162 341